# EUROPÄISCHE PATENTSCHRIFT

(11) **EP 3 299 079 B1**
(45) Veröffentlichungstag und Bekanntmachung des Hinweises auf die Patenterteilung: **04.12.2019**
(21) Anmeldenummer: 16189911.7
(22) Anmeldetag: 21.09.2016
(51) Int. Cl.: B01D 53/56, B01D 53/79, B01D 53/86, B01D 53/90, F23J 15/00

(54) **GASBEHANDLUNGSANLAGE UND VERFAHREN ZUM BETRIEB EINER GASBEHANDLUNGSANLAGE MIT EINER INJEKTIONSLANZE**
GAS TREATMENT SYSTEM AND METHOD FOR OPERATING A GAS TREATMENT SYSTEM WITH AN INJECTION LANCE
INSTALLATION DE TRAITEMENT DU GAZ ET PROCÉDÉ DE FONCTIONNEMENT D'UNE INSTALLATION DE TRAITEMENT DU GAZ AVEC UNE LANCE D'INJECTION

(43) Veröffentlichungstag der Anmeldung: 28.03.2018
(73) Patentinhaber: Bilfinger Engineering & Technologies GmbH, 46047 Oberhausen (DE)
(72) Erfinder: KROPIEWNICKI, Rafal, 97230 Estenfeld (DE)
(74) Vertreter: Cohausz & Florack

(56) Entgegenhaltungen:
- EP-A1- 0 112 101
- CN-A- 1 872 398
- CN-U- 202 860 407
- CN-Y- 201 244 479
- US-A- 4 846 402
- US-A1- 2016 045 862

## Beschreibung

Die Erfindung betrifft eine Gasbehandlungsanlage, insbesondere Gasreinigungsanlage, mit wenigstens einem Kanal zum Durchleiten wenigstens eines Gasstroms und mit wenigstens einer in den wenigstens einen Kanal eingebrachten Injektionslanze umfassend wenigstens eine Düseneinheit. Zudem betrifft die Erfindung auch ein Verfahren zur Behandlung wenigstens eines Gasstroms, insbesondere in einer Gasbehandlungsanlage der genannten Art oder mit einer Injektionslanze der genannten Art.

Es sind unterschiedliche Gasbehandlungsanlagen und Verfahren bekannt, bei denen über eine Injektionslanze eine Zusatzkomponente in einen Gasstrom eingedüst wird. Zum Eindüsen sind die Injektionslanzen mit wenigstens einer Düseneinheit versehen, die über wenigstens eine Düsenöffnung verfügen. Aus der Düsenöffnung tritt dann die über eine Zuführeinheit zur Düseneinheit zugeführte Zusatzkomponente aus, und zwar so, dass sich die Zusatzkomponenten in dem Gasstrom, in den die Zusatzkomponente eingedüst wird, verteilt. Auf die beschriebene Weise können unterschiedliche Gasströme auf unterschiedliche Arten mit Zusatzkomponenten behandelt werden. In vielen Fällen handelt es sich dabei um eine Gasreinigung, wobei es sich bei dem Gasstrom um ein Rauchgas handeln kann, aber nicht muss. Die Zusatzkomponente kann beispielweise dazu genutzt werden, um Komponenten des Gasstroms zu absorbieren, zu adsorbieren oder reaktiv umzusetzen. Es kann anstelle der Gasreinigung auch eine Konditionierung des Gasstroms vorgesehen sein, etwa für eine spätere Nutzung des entsprechend konditionierten Gasstroms. So kann beispielsweise eine gewünschte Zusammensetzung des Gasstroms oder ein bestimmter Parameter des Gasstroms, wie etwa die Temperatur, eingestellt werden.

Bei den sogenannten SCR-Verfahren (Selective Catalytic Reduction/Selektive katalytische Reduktion) werden als Zusatzkomponente beispielweise Reaktionsmittel, insbesondere Reduktionsmittel in einen Gasstrom, insbesondere einen Rachgasstrom eingedüst, um die Stickoxide (NOₓ) des Gasstroms wenigstens zum Teil im Wege einer katalytischen Reaktion unter Umsetzung des Reaktionsmittels zu reduzieren. Die Stickoxide werden im SCR-Verfahren selektiv zu molekularem Stickstoff und Wasser umgesetzt. Eine hohe Effizienz des Katalysators bzw. der Katalysatorstufe bei geringem Bauraum derselben kann erreicht werden, wenn das wenigstens eine Katalysatorelement eine Trägerstruktur und ein katalytisch aktives Katalysatormaterial aufweist. Das katalytisch aktive Katalysatormaterial kann beispielsweise Titandioxid (TIO₂), Vanadiumoxid (V₂O₅), Wolframoxid (WO₃) oder Chromit (FeCr₂O₄) sein. Dabei bietet es sich aus strömungstechnischen Gründen insbesondere an, wenigstens ein Katalysatorelement in Form von Platten und/oder einer Wabenstruktur auszubilden.

Günstige Ergebnisse sowohl hinsichtlich der gleichförmigen Zugabe von der als Reduktionsmittel ausgebildeten Zusatzkomponente zum Gasstrom, insbesondere Rauchgas, als auch hinsichtlich der Umsetzung der Stickoxide werden insbesondere für Reduktionsmittel in Form von Ammoniak, Harnstoff und/oder wenigstens einem Ammoniumsalz erwartet. Dabei kann das Reduktionsmittel des einfacheren Handlings und der zweckmäßigeren Vermischung von Reduktionsmittel und Gasstrom wegen auf unterschiedliche Weise zugeführt werden. Beispielsweise kann Ammoniak gasförmig, flüssig oder in einer, vorzugsweise wässrigen, Lösung zugeführt werden. Im flüssigen oder gasförmigen Zustand zugeführtes Ammoniak kann dabei unverdünnt oder verdünnt dem Gasstrom zugeführt werden. Beispielsweise kann Ammoniak vor dem Zugeben zum Rauchgas einem Trägermittel, etwa aus Druckluft, zugemischt werden. Harnstoff oder Ammoniumsalze werden dagegen vorzugsweise in einer, ebenfalls vorzugsweise wässrigen, Lösung zugeführt. Nach oder bei dem Zuführen des Reduktionsmittels kann das Reduktionsmittel, die aktive Komponente, das Trägermittel und/oder das Lösungsmittel bedarfsweise verdampfen. Als das Reduktionsmittel kann vorliegend also das dem Gasstrom zugesetzte Mittel bzw. die entsprechende Mischung angesehen werden, auch wenn das eigentliche Reduktionsmittel im chemischen Sinne, das vorliegend als die aktive Komponente des Reduktionsmittels bezeichnet werden kann, nur einen Teil des Reduktionsmittels ausmachen kann.

Bei staubbeladenen Gasströmen kann eine effiziente Verfahrensführung erreicht werden, wenn der Gasstrom bei der katalytischen Umsetzung der Stickoxide beispielsweise einen Staubgehalt bis 3000 mg/Nm³ und/oder eine Temperatur zwischen ungefähr 300°C und 450°C aufweist. Es kann also zweckmäßig sein, bei der katalytischen Reduktion der Stickoxide gezielt einen Teil des Staubs im Gasstrom zu belassen, den Staubgehalt aber vorab soweit zu verringern, dass der Katalysatorabrieb tolerierbar ist und auch sonst lediglich vertretbare Beeinträchtigungen aus dem Staubgehalt resultieren. Bedarfsweise kann anschließend weiterer Staub abgeschieden werden, sei es durch eine gezielte Staubabscheidung, eine Wäsche des Gasstroms oder dergleichen. Alternativ oder zusätzlich ist es energetisch günstig, den Gasstrom bei der Konditionierung für die katalytische Reduktion der Stickoxide lediglich auf eine Temperatur zwischen etwa 300°C und etwa 450°C abkühlen zu lassen. Bedarfsweise können 300°C und 450°C auch als absolute Grenzen angesehen werden, obwohl dies verfahrenstechnisch eher nicht erforderlich sein wird. Um ein Aufheizen des Rauchgases für die katalytische Reduktion von Stickoxiden zu vermeiden, wird bedarfsweise vor der Elimination der Stickoxide keine Wäsche des Gasstroms zur Abscheidung weiterer Komponenten des Gasstroms durchgeführt.

Die selektive katalytische Umsetzung von Stickoxiden erfolgt beispielsweise unter Verwendung von Ammoniak und gemäß der folgenden Reaktionsgleichungen:

4 NH₃ + 4 NO + O₂ -> 4 N₂ + 6 H₂O

2 NH₃ + NO + NO₂ -> 2 N₂ + 3 H₂O

Der Ammoniak wird dem Gasstrom beispielweise in wässriger Lösung oder als entsprechender Dampf zugeführt. Alternativ kann dem Gasstrom auch eine wässrige Harnstofflösung zugesetzt werden, die dann zu Ammoniak umgesetzt wird. Andere Reaktionsmittel sind ebenfalls denkbar.

(NH₂)₂CO -> NH₃ + HNCO

HNCO + H20 -> NH₃ +CO₂

Hinsichtlich der Zugabe von Zusatzkomponenten bietet sich insbesondere das Eindüsen derselben in den Gasstrom an. Auf diese Weise kann die Zusatzkomponente fein und verhältnismäßig gleichförmig über den Strömungsquerschnitt des Gasstroms verteilt werden. Dies wird dadurch unterstützt, dass die Zusatzkomponente mit wenigstens einer Druckdüse und/oder wenigstens einer Mehrstoffdüse in den Gasstrom eingedüst wird. Entsprechende Düsen haben sich bewährt und können mit den in Frage kommenden Zusatzkomponenten zuverlässig betrieben werden. Bei den Druckdüsen wird die flüssige Zusatzkomponente unter hohem Druck aus der Düsenöffnung gepresst, wobei die Zusatzkomponente auf Scherung beansprucht und im Falle einer Flüssigkeit in feine Tröpfchen zerrissen wird. Bei Mehrstoffdüsen strömt ein Treibmittel, beispielsweise Druckluft, unter hohem Druck aus einer Treibmittelöffnung, insbesondere einem Ringkanal, dabei reißt das Treibmittel die Zusatzkomponente aus der benachbarten, typischerweise zentralen Düsenöffnung, mit und zerteilt diese im Falle einer Flüssigkeit ebenfalls in feine Tröpfchen. Wird das Reduktionsmittel dem Rauchgas gasförmig oder dampfförmig zugesetzt, kann das Reduktionsmittel ebenfalls unter Druck aus einer Druckdüse oder mit Hilfe einer Mehrstoffdüse zugesetzt werden. Die dampfförmige Zusatzkomponente kann dabei bedarfsweise erst mit dem Entspannen der Zusatzkomponente beim Austritt aus der zunächst flüssigen Zusatzkomponente aus der Düsenöffnung gebildet werden. Mehrstoffdüsen bieten sich jedoch insbesondere bei flüssigen Reduktionsmitteln an.

In der CN202860407U ist ein Rauchgasbehandlungskonzept durch selektive katalytische Behandlung beschrieben, bei dem die Eindüsung eines gasförmigen oder flüssigen Reduktionsmittels vor einem SCR-Katalystor erfolgt. Das Rauchgas wird dabei an einer Prallplatte umgelenkt und innerhalb eines Kragens an einer Düsenöffnung vorbeigeführt. Beim Eindüsen einer Zusatzkomponente in einen Gasstrom wird bei sehr unterschiedlichen Zusatzkomponenten und bei sehr unterschiedlichen Gasströmen oftmals mit der Zeit eine starke Verschmutzung der Injektionslanze oder der Düseneinheit beobachtet, welche den Gasstrom und/oder die Strömung der Zusatzkomponente beeinträchtigen kann. Es kann soweit kommen, dass die Düsenöffnungen der Düseneinheiten verstopfen und keine oder nur noch eine geringe Menge an Zusatzkomponente aus der Düseneinheit austreten kann.

Daher liegt der vorliegenden Erfindung die Aufgabe zugrunde, die Gasbehandlungsanlage und das Verfahren jeweils der eingangs genannten Art derart auszugestalten und weiterzubilden, dass die Injektionslanzen über einen längeren Zeitraum störungsfrei betrieben werden können.

Diese Aufgabe ist bei einer Gasbehandlungsanlage nach dem Oberbegriff von Anspruch 1 dadurch gelöst, dass wenigstens ein die wenigstens eine Düsenöffnung umgebender und sich in der Eindüserichtung der Zusatzkomponente erstreckender Kragen vorgesehen ist, der die Düsenöffnung gegenüber dem am Kragen vorbei strömenden Gasstrom abschirmt.

Im Übrigen ist die zuvor genannte Aufgabe auch gemäß Anspruch 7 durch ein Verfahren zur Behandlung wenigstens eines Gasstroms, insbesondere in einer Gasbehandlungsanlage nach einem der Ansprüche 1 bis 6 gelöst.

Die Erfindung hat erkannt, dass beim Eindüsen einer Zusatzkomponente in einen Gasstrom die Zusatzkomponente meist mit einer sehr hohen Geschwindigkeit aus der Düsenöffnung aus und in den Gasstrom eintritt, der mit einer sehr viel geringeren Geschwindigkeit vorbeiströmt. Der entsprechende Geschwindigkeitsüberschuss der Zusatzkomponente am Austritt aus der Düseneinheit führt zu einem starken Unterdruck, so dass durch den Unterdruck Komponenten aus dem Gasstrom angesaugt werden, die sich dann an der Düseneinheit ablagern können. Besonders kritisch sind in diesem Zusammenhang oftmals mit dem Gasstrom mitgetragene Partikel. Es können aber beispielsweise auch Reaktionsprodukte an der Düseneinheit gebildet werden, die sich an der Düseneinheit ablagern können.

Das Anziehen von Komponenten aus dem Gasstrom infolge des Unterdrucks wird erfindungsgemäß durch die Verwendung eines Kragens vermieden, der um die Düsenöffnung vorgesehen ist und die Düsenöffnung somit gegenüber dem Gasstrom abschirmt. Zwar tritt die Zusatzkomponente am Ende des Kragens aus diesem aus, allerdings hat sich die Strömung der Zusatzkomponente bis dahin bereits deutlich abgebremst. Um die Strömung der Zusatzkomponente nicht übermäßig zu behindern, erstreckt sich der Kragen vorzugsweise in der Eindüserichtung der Zusatzkomponente, und zwar vorzugsweise so weit, dass sich die entsprechenden Geschwindigkeitsverhältnisse einstellen.

In diesem Zusammenhang ist zu berücksichtigen, dass gerade beim Zerstäuben von flüssigen Zusatzkomponenten eine hohe Austrittsgeschwindigkeit aus der Düsenöffnung erforderlich ist, um entsprechende Scherkräfte zu erzeugen, die ein Zerstäuben der Zusatzkomponente in feine Tröpfchen sicherstellen. Beim Eindüsen von Dampf stellt sich auch meist eine hohe Austrittsgeschwindigkeit ein, weil der Dampf vor dem Austreten aus der Düsenöffnung unter einem hohen Vordruck steht. Eine schlichte Verringerung der Austrittsgeschwindigkeit der Zusatzkomponente hat sich daher als nicht zielführend erwiesen.

Der besseren Verständlichkeit halber und zur Vermeidung von unnötigen Wiederholungen werden nachfolgend die Injektionslanze, die Gasbehandlungsanlage und das Verfahren gemeinsam beschrieben, ohne jeweils im Einzelnen zwischen der Injektionslanze, der Gasbehandlungsanlage und dem Verfahren zu unterscheiden. Für den Fachmann ist jedoch aufgrund des Kontextes jeweils ersichtlich, welche Merkmale jeweils für die Injektionslanze, die Gasbehandlungsanlage und das Verfahren bevorzugt sind.

Bei einer ersten besonders bevorzugten Ausgestaltung der Injektionslanze ist der wenigstens eine Kragen umlaufend zur wenigstens einen Düsenöffnung geschlossen ausgebildet. Auf diese Weise wird, vorzugsweise vollständig, verhindert, dass im Bereich der Düsenöffnung ein Teil des Gasstroms angesaugt wird, was zu Ablagerungen an der wenigstens einen Düsenöffnung führen könnte. Alternativ oder zusätzlich kann der wenigstens eine Kragen in einem Mantelbereich des Kragens geschlossen ausgebildet sein. So kann, vorzugsweise vollständig, verhindert werden, dass in dem sich der Düsenöffnung anschließenden Bereich in der Eindüserichtung ein Teil des Gasstroms angesaugt wird, was ebenfalls zu Ablagerungen an der wenigstens einen Düsenöffnung führen könnte. Um das Auftreten der Zusatzkomponente aus dem Kragen und in den Gasstrom nicht oder nicht zu sehr zu beeinträchtigen, kann der wenigstens eine Kragen an der wenigstens einen Düsenöffnung in der Eindüserichtung entgegengesetzten Seite offen ausgebildet sein.

Um die Verteilung der Zusatzkomponente in dem Gasstrom zu begünstigen, ein Niederschlag der Zusatzkomponente am Kragen weitgehend zu vermeiden, die Ausbildung eines Freistrahls der Zusatzkomponente zu ermöglichen und/oder ein Abbremsen der Zusatzkomponente zwischen der Düsenöffnung und der Austrittsöffnung des Kragens zu ermöglichen, bietet es sich an, wenn sich der Querschnitt des wenigstens einen Kragens von der wenigstens einen Düsenöffnung in der Eindüserichtung aufweitet. So kann sich auch der Querschnitt der Strömung der Zusatzkomponente beim Durchtritt durch den Kragen aufweiten. Das Aufweiten des Kragens erfolgt dabei strömungstechnisch bevorzugt trichterförmig, insbesondere kontinuierlich bzw. stetig. Eine gleichförmige Aufweitung ist dabei strömungstechnisch besonders bevorzugt aber nicht zwingend. Besonders gute Ergebnisse wurden erhalten, wenn der wenigstens eine Kragen in der Eindüserichtung in wenigstens einer Querrichtung einen Öffnungswinkel zwischen 40° und 100°, vorzugsweise zwischen 50° und 90°, insbesondere zwischen 60° und 80° aufweist. Der Öffnungswinkel beschreibt dabei mit welchem Winkel sich der Kragen in die Eindüserichtung in einer Ebene aufweitet. Gleiches kann auch für zwei oder mehrere Ebenen gelten. Bei einem kegelförmigen Kragen kann der Öffnungswinkel beispielweise umlaufend und konstant vorgesehen werden.

Konstruktiv und fertigungstechnisch bevorzugt ist es grundsätzlich, wenn der wenigstens eine Kragen einen dreieckigen, viereckigen, sechseckigen, achteckigen, runden oder ovalen Querschnitt aufweist. Alternativ oder zusätzlich hat es sich zur Angleichung der Strömungsgeschwindigkeiten zwischen der Zusatzkomponente und dem Gasstrom als bevorzugt erwiesen, wenn die Querschnittsfläche des wenigstens einen Kragens an dem der wenigstens einen Düsenöffnung abgewandten Seite des Kragens wenigstens um den Faktor drei, vorzugsweise wenigstens um den Faktor fünf, insbesondere wenigstens um den Faktor acht, weiter insbesondere wenigstens um den Faktor zehn größer ist als der Querschnitt des Kragens im Bereich der Düsenöffnung. Entsprechende Querschnittsverhältnisse kommen auch der Ausbildung eines Freistrahls und dem Verteilen der Zusatzkomponente im Gasstrom zugute.

Zum Eindüsen der Zusatzkomponente bietet es sich insbesondere im Falle einer flüssigen Zusatzkomponente zum Zwecke des Zerstäuben und/oder zum Einstellen des gewünschten Massenstroms an Zusatzkomponente an der Düsenöffnung an, die wenigstens eine Düseneinheit als Zweistoffdüse oder Mehrstoffdüse auszubilden. Dabei ist dann vorzugsweise ein Stoff ein Treibmittel, das die wenigstens eine Zusatzkomponente aus der Düsenöffnung reißt. Bei dem Treibmittel kann es sich der Einfachheit halber um Luft oder einen Teilstrom des Gasstroms handeln, etwa um die Sauerstoffkonzentration im Gasstrom gering zu halten. Dies kann sich günstig auf eine Reduktion von Stickoxiden auswirken. Die Düseneinheit kann grundsätzlich aber auch als Einstoffdüse ausgebildet sein. Alternativ oder zusätzlich kann eine die wenigstens eine Zuführeinheit zum Zuführen der wenigstens einen Zusatzkomponente wenigstens teilweise umschließende Spülleitung zum Durchströmen mit einem Spülfluid in Richtung der wenigstens einen Düseneinheit vorgesehen sein. Die Spülleitung kann der Einfachheit halber ein äußeres Rohr der Lanze bilden, in dem wenigstens ein weiteres Rohr aufgenommen sein kann, um beispielsweise die Zusatzkomponente und bedarfsweise ein Treibmittel zur Düseneinheit zu fördern. Die Spülleitung, insbesondere der äußere Ringkanal des äußeren Rohrs kann dann dazu genutzt werden, um ein Spülfluid, etwa Luft oder ein Teil des Gasstroms, hindurchzuleiten um so beispielsweise die wenigstens eine innere Leitung und/oder die Injektionslanze selbst zu kühlen.

Bei einer ersten besonders bevorzugten Ausgestaltung der Gasbehandlungsanlage ist an der wenigstens einen Injektionslanze wenigstens ein Anschluss für wenigstens eine Zusatzkomponente vorgesehen. Über den wenigstens einen Anschluss kann die wenigstens eine Zusatzkomponente der Injektionslanze und über wenigstes eine entsprechende Leitung in der Injektionslanze der Düseneinheit und letztlich der Düsenöffnung zugeführt werden. Zudem kann, insbesondere im Falle einer Injektionslanze mit wenigstens einer Zweistoffdüse oder Mehrstoffdüse, die Injektionslanze mit wenigstens einem Anschluss für wenigstens ein Treibmittel zum Eindüsen der wenigstens einen Zusatzkomponente versehen sein. Unabhängig davon kann wenigstens ein Anschluss für wenigstens ein Spülfluid zum Spülen der wenigstens einen Injektionslanze vorgesehen sein. So können die Zusatzkomponente, das Treibmittel und/oder das Spülfluid einzeln und in geeigneter Weise zugeführt werden.

Der wenigstens einen Injektionslanze ist in der Strömungsrichtung des wenigstens einen Gasstroms wenigstens ein Katalysator nachgeschaltet, wobei der Katalysator der Gasbehandlung der Gasbehandlungsanlage dient. Der Katalysator katalysiert wenigstens eine Reaktion zwischen der wenigstens einen Zusatzkomponente und wenigstens einer Komponente des wenigstens einen Gasstroms. Dann kann eine effektive Gasbehandlung erreicht werden.

Besonders bevorzugt ist es, die Gasbehandlungsanlage als Gasreinigungsanlage auszubilden, um den Gasstrom in irgendeiner Weise zu reinigen. Dies geschieht beispielsweise indem eine Komponente des Gasstroms wenigstens teilweise abgeschieden oder wenigstens teilweise reaktiv umgesetzt wird. So ist der wenigstens eine Katalysator zur Verringerung der Konzentration von Stickoxiden in einem Gasstrom, insbesondere Rauchgasstrom, als SCR-Katalysator zur selektiven Reduktion von Stickoxiden ausgebildet.

Bei einer ersten besonders bevorzugten Ausgestaltung des Verfahrens durchströmt die wenigstens eine Zusatzkomponente den wenigstens einen Kragen wenigstens im Wesentlichen in der gleichen Richtung wie der wenigstens eine Gasstrom den wenigstens einen Kragen passiert. Mit anderen Worten sind die Strömungsrichtungen des Gasstroms und der Zusatzkomponente im Bereich des Kragens bzw. an dessen Austritt wenigstens im Wesentlichen parallel zueinander ausgerichtet. Dies ist strömungstechnisch günstig und erlaubt zudem eine rasche Verteilung der Zusatzkomponente im Gasstrom. Alternativ oder zusätzlich kann sich der Strömungsquerschnitt der wenigstens einen Zusatzkomponente beim Durchströmen des wenigstens einen Kragens aufweiten. So wird die Strömung der Zusatzkomponente abgebremst und es kann sich ein ungestörter Freistrahl der Zusatzkomponente ausbilden, ohne dass sich die Zusatzkomponente übermäßig an dem Kragen niederschlägt.

Wenn die Geschwindigkeit der wenigstens einen aus dem wenigstens einen Kragen ausströmenden Zusatzkomponente weniger als das Fünffache, vorzugsweise weniger als das Dreifache, insbesondere weniger als das Doppelte, der Geschwindigkeit des wenigstens einen an dem wenigstens einen Kragen vorbeiströmenden Gasstroms beträgt, saugt die Strömung der Zusatzkomponente den Gasstrom nicht oder nicht nennenswert in den Kragen hinein, so dass die Bildung von Ablagerungen im Kragen weitgehend vermieden werden kann. Zweckmäßig für das Eindüsen der Zusatzkomponente, insbesondere wenn diese flüssig vorliegt bzw. über eine Mehrkomponentendüse eingedüst wird, kann es sein, wenn die Geschwindigkeit der wenigstens einen Zusatzkomponente beim Austreten aus der wenigstens einen Düsenöffnung wenigstens siebenfach, vorzugsweise wenigstens zehnfach, insbesondere wenigstens zwanzigfach, so groß ist wie die Geschwindigkeit des den Kragen passierenden wenigstens einen Gasstroms bzw. alternativ oder zusätzlich der Austrittsgeschwindigkeit der wenigstens einen Zusatzkomponente aus dem wenigstens einen Kragen. So wird ein zweckmäßiges Verhalten beim Eindüsen erhalten, ohne dass dies übermäßige Auswirkungen hinsichtlich der Ablagerungen oder der Verteilung der Zusatzkomponente im Gasstrom haben muss.

Über die wenigstens eine Injektionslanze wird wenigstens eine dampfförmige und/oder flüssige Zusatzkomponente in den wenigstens einen Gasstrom eingedüst. So kommt die Funktion des Kragens in besonderem Maße zur Geltung, weil die über die Zusatzkomponente in den Gasstrom eingebrachte Feuchtigkeit das Ablagern und Anbacken von Ablagerungen bzw. Partikeln grundsätzlich begünstigt.

Alternativ oder zusätzlich kann über die wenigstens eine Injektionslanze als Zusatzkomponente wenigstens ein Reaktionsmittel zur Reaktion mit wenigstens einer Komponente des wenigstens einen Gasstroms eingedüst werden. So kann bedarfsweise neben einer Konditionierung des Gasstroms insbesondere eine Abreicherung einer Komponente des Gasstroms erreicht werden. Die Komponente wird letztlich reaktiv umgesetzt, weshalb die Konzentration der Komponente im Gasstrom prinzipiell abnimmt, je nach den ablaufenden Reaktionen. Besonders bevorzugt ist es dabei, wenn das wenigstens eine Reaktionsmittel zusammen mit der wenigstens einen Komponente des wenigstens einen Gasstroms an wenigstens einem Katalysator wenigstens teilweise umgesetzt wird. Durch den Katalysator kann die reaktive Umsetzung der wenigstens einen Komponente des Gasstroms beschleunigt werden und der Umsatz bei den entsprechenden Reaktionen gesteigert werden.

Über die wenigstens eine Injektionslanze wird wenigstens ein Reaktionsmittel, vorzugsweise Reduktionsmittel, insbesondere Ammoniak, Harnstoff und/oder Ammoniumsalze, zur selektiven katalytischen Reduktion (SCR) von Stickoxiden (NOx) des wenigstens einen Gasstroms, insbesondere Rauchgases, eingedüst. Hierbei können die erfindungsgemäß zu vermeidenden Ablagerungen zu erheblichen Nachteilen führen. Die Stickoxide des wenigstens einen Gasstroms werden mit dem wenigstens einen Reduktionsmittel an wenigstens einem Katalysator selektiv reduziert.

Nachfolgend wird die Erfindung anhand einer lediglich ein Ausführungsbeispiel darstellenden Zeichnung näher erläutert. In der Zeichnung zeigt
- Fig. 1: eine Gasbehandlungsanlage zur Entstickung eines Rauchgases im Wege eines SCR-Verfahrens in einer schematischen Seitenansicht,
- Fig. 2: die Gasbehandlungsanlage aus Fig. 1 in einer Draufsicht in Strömungsrichtung in einer schematischen Ansicht,
- Fig. 3: eine Injektionslanze der Gasbehandlungsanlage aus Fig. 1 in einer Seitenansicht im in die Gasbehandlungsanlage eingebauten Zustand,
- Fig. 4: ein Detail der Injektionslanze im Bereich der Düseneinheit in einer schematischen Seitenansicht und
- Fig. 5: das Detail der Injektionslanze aus Fig. 4 in einer Ansicht entgegen der Eindüserichtung.

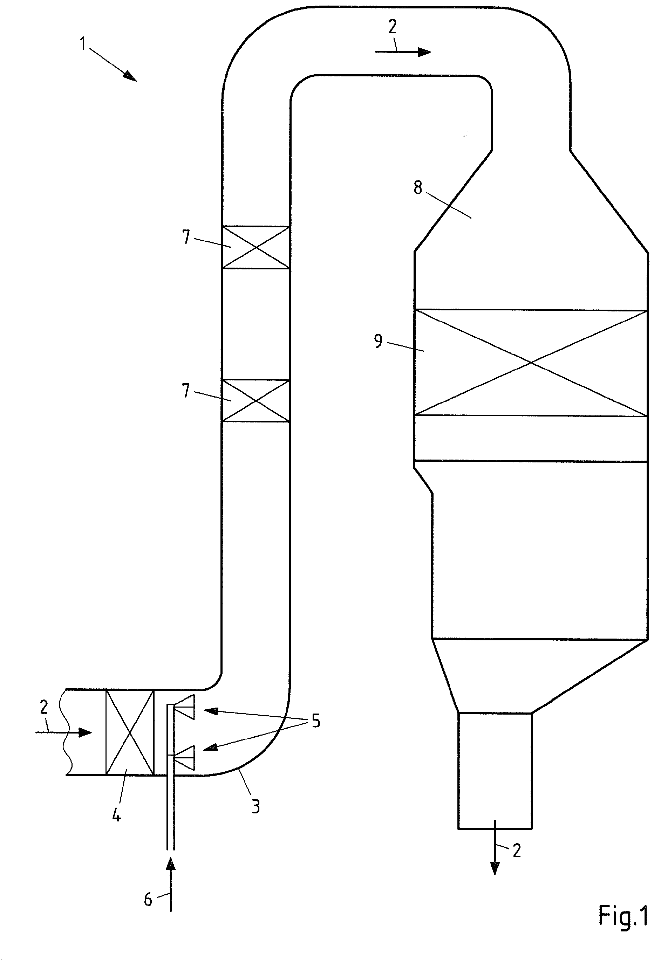

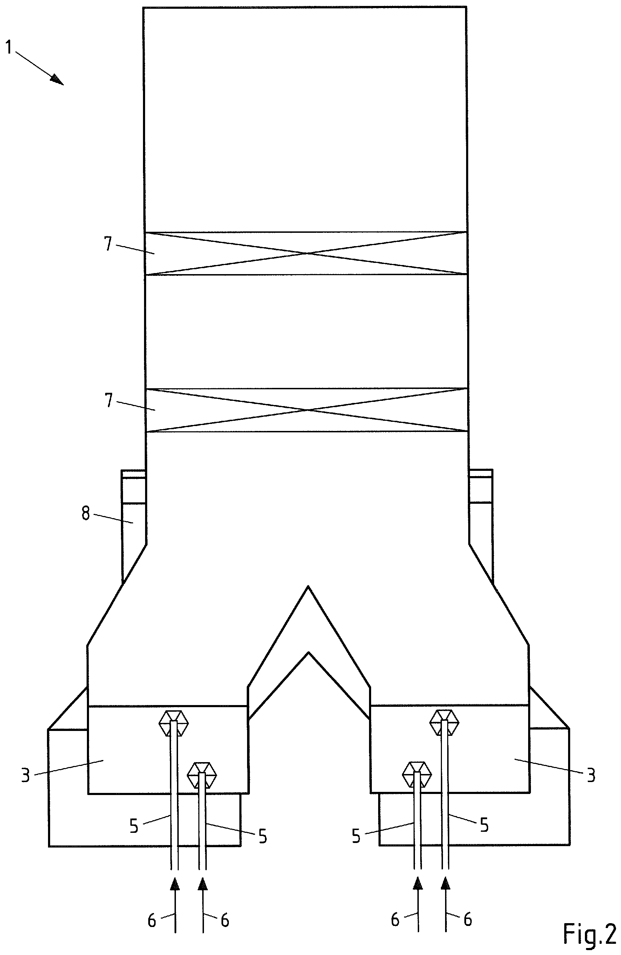

In den Fig. 1 und 2 ist eine Gasbehandlungsanlage 1 in Form einer Gasreinigungsanlage in unterschiedlichen Ansichten dargestellt. Die Gasbehandlungsanlage 1 kann dabei auch als Teil einer weitreichenderen Gasbehandlungsanlage ausgebildet sein. In die Gasbehandlungsanlage 1 tritt in Pfeilrichtung ein Gasstrom 2 ein, bei dem es sich vorzugsweise um ein Rauchgas aus einer Brennkammer handelt. Der Gasstrom 2 strömt bei der dargestellten und insoweit bevorzugten Gasbehandlungsanlage 1 durch einen Kanal 3, indem ein statischer Mischer 4 zur Vergleichmäßigung des Gasstroms vorgesehen ist. Anschließend passiert der Gasstrom 2 Injektionslanzen 5, mit denen eine den Injektionslanzen zugeführte Zusatzkomponente 6 in Form eines Reduktionsmittels, insbesondere in Form einer wässrigen Ammoniaklösung, in den Gasstrom 2 eingedüst wird. Nachdem der Gasstrom 2 zwei weitere statische Mischer 7 passiert hat, die ebenso wie der statische Mischer 4 am Eintritt der Gasbehandlungsanlage 1 prinzipiell auch verzichtbar wären, gelangt der Gasstrom 2 zusammen mit der darin verteilten Zusatzkomponente 6 in einen Reaktionsraum 8, in dem ein Katalysator 9, insbesondere SCR-Katalysator, vorgesehen ist, an dem eine selektive katalytische Reduktion der im Gasstrom 2 enthaltenen Stickoxide in Stickstoff und Wasser unter gleichzeitiger Umsetzung der Zusatzkomponente 6 in Form des Reduktionsmittels erfolgt. Der entsprechend entstickte Gasstrom 2 verlässt die Gasbehandlungsanlage 1 anschließend und kann bedarfsweise weiteren Reinigungsschritten zugeführt werden.

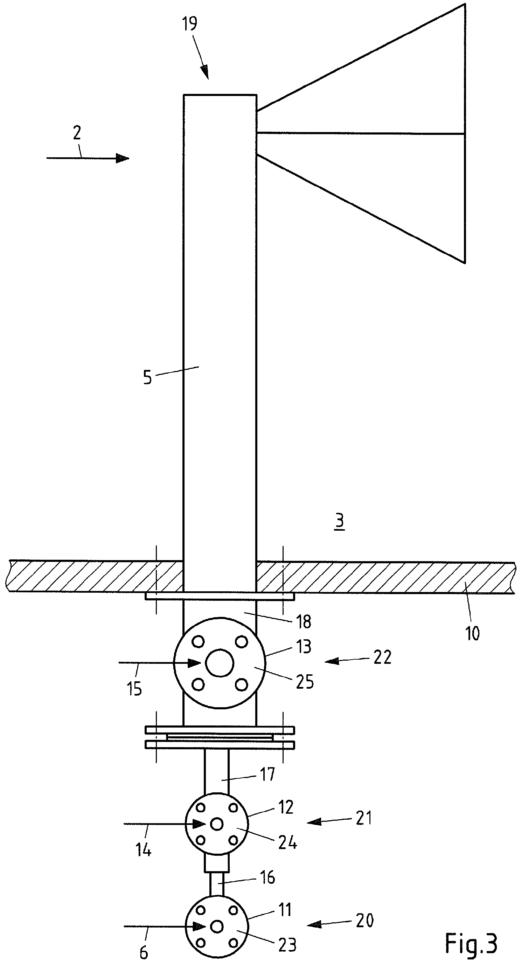

In der Fig. 3 ist eine der in den Kanal 3 der Gasbehandlungsanlage 1 eingesetzten Injektionslanzen 5 dargestellt. Die Injektionslanzen durchstoßen dabei die Wand 10 des Kanals 3. Außerhalb des den Gasstrom 2 führenden Kanals 3 sind an der Injektionslanze 5 Anschlüsse 11,12,13 für die Zuführung der Zusatzkomponente 6, eines Treibmittels 14, insbesondere in Form von Luft, und eines Spülfluids 15, ebenfalls insbesondere in Form von Luft, vorgesehen, die Anschlüsse 11,12,13 sind mit Leitungen 16,17,18 in Form von konzentrischen Rohren verbunden, die die Zusatzkomponente 6, das Treibmittel 14 und das Spülfluid 15 in Richtung der Düseneinheit 19 der Injektionslanze 5 transportiert. Bei der dargestellten und insoweit bevorzugten Injektionslanze 5 ist die Leitung 16 für die Zusatzkomponente 6 zentral angeordnet. Konzentrisch zur Leitung 16 für die Zusatzkomponente 6 ist eine Leitung 17 für das Treibmittel 14 vorgesehen, die entsprechend als Ringleitung ausgebildet ist. Konzentrisch dazu und ebenfalls als Ringleitung ausgebildet ist die Leitung 18 für das Spülfluid 15 ausgebildet. Bei der dargestellten und insoweit bevorzugten Injektionslanze 5 bilden die Anschlüsse 11,12,13 und die Leitungen 16,17,18 die Zuführeinheiten 20,21,22 für die Zusatzkomponente 6, das Treibmittel 14 und das Spülfluid 15. Die Anschlüsse 11,12,13 sind zudem jeweils mit einem Flansch 23,24,25 versehen.

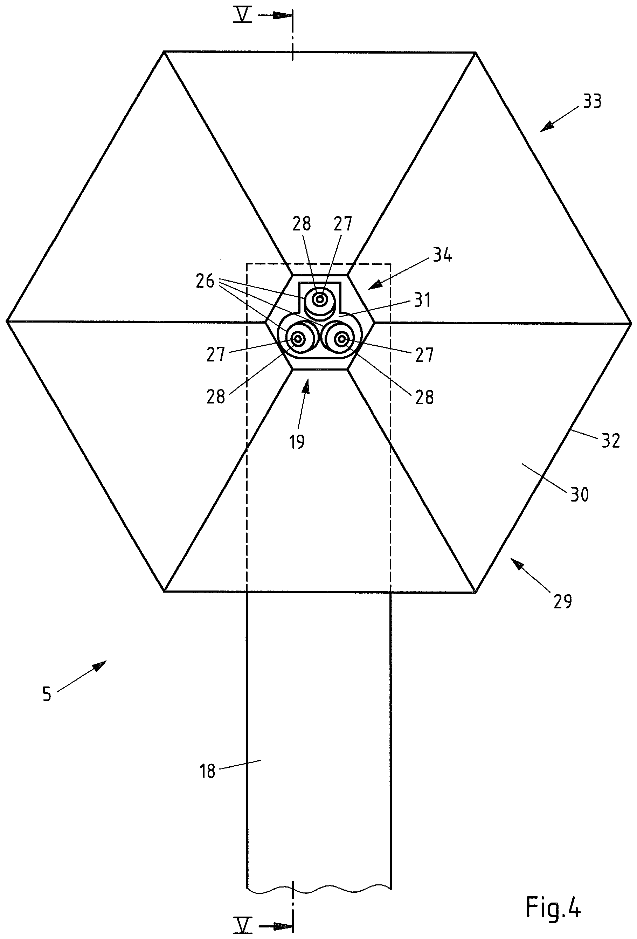

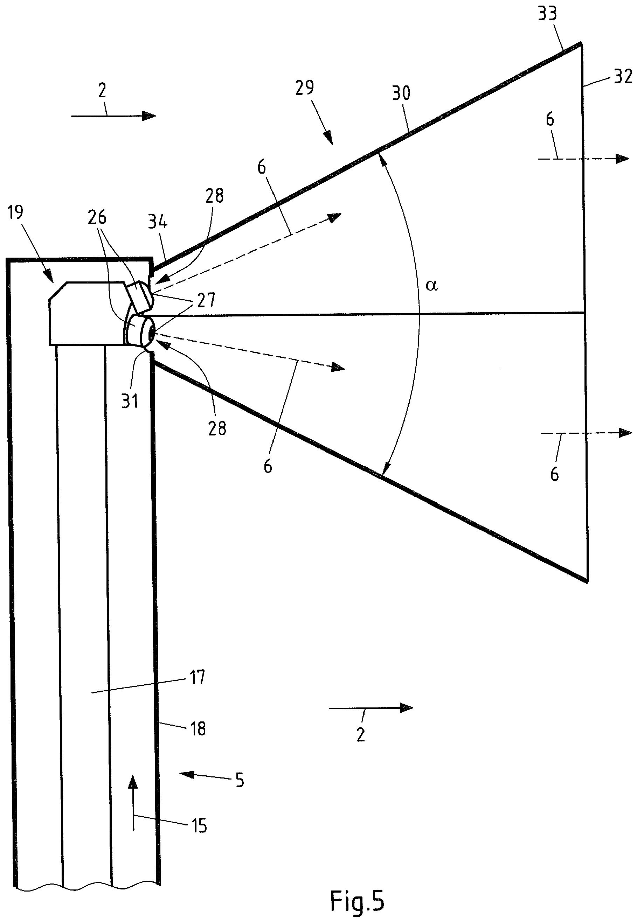

An dem den Anschlüssen 11,12,13 entgegengesetzten Ende der Injektionslanze 5 ist, wie dies insbesondere in den Fig. 4 und 5 dargestellt ist, die Düseneinheit 19 vorgesehen, die bei der dargestellten und insoweit bevorzugten Injektionslanze 5 drei Zweistoffdüsen 26 umfasst, die jeweils eine Düsenöffnung 27 für die Zusatzkomponente 6 bereitstellt. Durch die jeweilige Düsenöffnung 27 tritt die Zusatzkomponente 6 aus, die infolge des durch eine konzentrisch zur Düsenöffnung 27 vorgesehene Ringdüse 28 gepressten Treibmittels 14 aus der Düsenöffnung 27 herausgerissen und zu sehr feinen Tröpfchen zerrissen wird. Die Zweistoffdüsen 26 sind gegeneinander geneigt vorgesehen. Alle drei Zweistoffdüsen 26 sind von einem gemeinsamen Kragen 29 umgeben, der sowohl im Bereich der Zweistoffdüsen 26 als auch in einem Bereich eines sich anschließenden Mantels 30 des Kragens 29 geschlossen ausgebildet ist und so das Innere des Kragens 29 von dem außerhalb des Kragens 29 vorgesehenen Gasstrom 2 trennt. Die Öffnung 31 der Injektionslanze 5 für das Spülfluid 15 ist ebenfalls innerhalb des Kragens 29 vorgesehen. Das Spülfluid 15 wird folglich auch in den Kragen 29 geleitet.

Der dargestellte und insoweit bevorzugte Kragen 29 weist einen wenigstens im Wesentlichen symmetrischen sechseckigen Querschnitt auf. Des Weiteren erstreckt sich der Kragen 29 parallel zum Kanal 3 und damit parallel zu dem entlang des Kanals 3 strömenden Gasstroms 2. Obschon die Düsenöffnungen 27 in geringfügig unterschiedliche Richtungen weisen, strömt die insgesamt über die Düsenöffnungen 27 verdüste Zusatzkomponente 6 dennoch wenigstens im Wesentlichen parallel zum Gasstrom 2 durch den Kragen 29 in Richtung der Öffnung 32 des Kragens 29 an dessen offenem Ende 33. Der Kragen 29 weist zwischen dem die Düsenöffnungen 27 umfassenden Ende 34 und dem offenen Ende 33 einen geschlossenen Mantel 30 auf. Dieser Mantel 30 weist zudem einen sich in Richtung des offenen Endes 33 weitenden Querschnitt auf. Der Querschnitt des dargestellten und insoweit bevorzugten Kragens 29 weitet sich kontinuierlich und gleichmäßig mit einem Öffnungswinkel α von etwa 70°. Die Breite des Kragens 29 an dessen offenem Ende 33 beträgt beispielsweise zwischen 400 mm und 700 mm, vorzugsweise zwischen 500 mm und 600 mm, vorliegend etwa 550 mm. Am geschlossenen Ende 34 des Kragens ist der Kragen 29 beispielweise zwischen 40 mm und 200 mm, vorzugsweise zwischen 60 mm und 150 mm, vorliegend zwischen 80 mm und 120 mm, breit. Die Länge des Kragens 29 zwischen den gegenüberliegenden Enden 33,34 beträgt etwa zwischen 300 mm und 600 mm, insbesondere etwa zwischen 400 mm und 500 mm.

Der Kragen 29 ist so ausgebildet, dass die Geschwindigkeit des den Kragen 29 passierenden Gasstroms 2 etwa der Geschwindigkeit der aus dem Kragen 29 austretenden Zusatzkomponente 6 gleicht. Beispielsweise kann die Geschwindigkeit des Gasstroms 2 zwischen 13 m/s und 17 m/s betragen, während die Geschwindigkeit der Zusatzkomponente 6 beim Austreten aus dem Kragen 29 und Eintreten in den Gasstrom etwa 15 m/s beträgt. Das Austreten der Zusatzkomponente aus den Düsenöffnungen 27 der Injektionslanze 5 erfolgt bei sehr viel höheren Geschwindigkeiten, und zwar über 100 m/s, insbesondere sehr viel mehr als 100 m/s.

### Bezugszeichenliste

- 1: Gasbehandlungsanlage
- 2: Gasstrom
- 3: Kanal
- 4: statischer Mischer
- 5: Injektionslanze
- 6: Zusatzkomponente
- 7: statischer Mischer
- 8: Reaktionsraum
- 9: Katalysator
- 10: Wand
- 11,12,13: Anschluss
- 14: Treibmittel
- 15: Spülfluid
- 16,16,17: Leitung
- 19: Düseneinheit
- 20,21,22: Zuführeinheit
- 23,24,25: Flansch
- 26: Zweistoffdüse
- 27: Düsenöffnung
- 28: Ringdüse
- 29: Kragen
- 30: Mantel
- 31,32: Öffnung
- 33,34: Ende

## Patentansprüche

1. Gasbehandlungsanlage (1) mit wenigstens einem Kanal (3) zum Durchleiten wenigstens eines Gasstroms (2) und mit wenigstens einer in den wenigstens einen Kanal (3) eingebrachten Injektionslanze (5) zum Eindüsen ausschließlich wenigstens einer dampfförmigen und/oder flüssigen Zusatzkomponente (6) in den wenigstens einen Gasstrom (2), wobei die wenigstens eine Injektionslanze wenigstens eine Düseneinheit (19) zum Eindüsen der wenigstens einen Zusatzkomponente (6) in den wenigstens einen Gasstrom (2) über wenigstens eine Düsenöffnung (27) und wenigstens eine Zuführeinheit (20) zum Zuführen der wenigstens einen Zusatzkomponente (6) zur wenigstens einen Düseneinheit (19) umfasst, wobei der wenigstens einen Injektionslanze (5) in der Strömungsrichtung des wenigstens einen Gasstroms (2) wenigstens ein SCR-Katalysator (9) für die Reaktion der Zusatzkomponente (6) und wenigstens einer Komponente des wenigstens einen Gasstroms (2) zur selektiven Reduktion von Stickoxiden (NOₓ) im wenigstens einen Gasstrom (2) nachgeschaltet ist, und wobei wenigstens ein die wenigstens eine Düsenöffnung (27) umgebender und sich in der Eindüserichtung der Zusatzkomponente (6) erstreckender Kragen (29) vorgesehen ist,
**dadurch gekennzeichnet, dass**
der Kragen (29) zur Abschirmung der Düsenöffnung (27) gegenüber dem am Kragen (29) vorbei strömenden Gasstrom (2) ausgebildet ist.

2. Gasbehandlungsanlage nach Anspruch 1,
**dadurch gekennzeichnet, dass** der wenigstens eine Kragen (29) umlaufend zur wenigstens einen Düsenöffnung (27) geschlossen ausgebildet ist und/oder dass der wenigstens eine Kragen (29) in einem Mantelbereich des Kragens (29) geschlossen ausgebildet ist und/oder der wenigstens eine Kragen (29) zum Austritt der Zusatzkomponente (6) an der der wenigstens einen Düsenöffnung (27) in der Eindüserichtung entgegengesetzten Seite offen ist.

3. Gasbehandlungsanlage nach Anspruch 1 oder 2,
**dadurch gekennzeichnet, dass** sich der Querschnitt des wenigstens einen Kragens (29) von der wenigstens einen Düsenöffnung (27) in der Eindüserichtung, vorzugsweise trichterförmig, insbesondere kontinuierlich, weiter insbesondere gleichförmig, aufweitet und/oder dass der wenigstens eine Kragen (29) in der Eindüserichtung einen Öffnungswinkel (a) zwischen 40° und 100°, vorzugsweise zwischen 50° und 90°, insbesondere zwischen 60° und 80° aufweist.

4. Gasbehandlungsanlage nach einem der Ansprüche 1 bis 3,
**dadurch gekennzeichnet, dass** der wenigstens eine Kragen (29) einen dreieckigen, viereckigen, sechseckigen,achteckigen, runden oder ovalen Querschnitt aufweist und/oder dass die Querschnittsfläche des wenigstens einen Kragens (29) an dem der wenigstens einen Düsenöffnung (27) abgewandten Seite des Kragens (29) wenigstens dreifach, vorzugsweise wenigstens fünffach, insbesondere wenigstens achtfach, weiter insbesondere wenigstens zehnfach, so groß ist wie im Bereich der Düsenöffnung (27).

5. Gasbehandlungsanlage nach einem der Ansprüche 1 bis 4,
**dadurch gekennzeichnet, dass** die wenigstens eine Düseneinheit (19) als Zweistoffdüse (26) und/oder Mehrstoffdüse ausgebildet ist und/oder dass ein die wenigstens eine Zuführeinheit (20) zum Zuführen der wenigstens einen Zusatzkomponente (6) wenigstens teilweise umschließende Spülleitung (18) zum Durchströmen mit einem Spülfluid (15) in Richtung der wenigstens einen Düseneinheit (19) vorgesehen ist.

6. Gasbehandlungsanlage nach einem der Ansprüche 1 bis 5,
**dadurch gekennzeichnet, dass** die wenigstens eine Injektionslanze (5) wenigstens einen Anschluss (11) für wenigstens eine Zusatzkomponente (6) aufweist und/oder dass die wenigstens eine Injektionslanze (5) wenigstens einen Anschluss (12) für wenigstens ein Treibmittel (14) zum Eindüsen der wenigstens einen Zusatzkomponente (6) aufweist und/oder dass wenigstens ein Anschluss (13) für wenigstens ein Spülfluid (15) zum Spülen der wenigstens einen Injektionslanze (5) vorgesehen ist.

7. Verfahren zur Behandlung wenigstens eines Gasstroms (2), insbesondere in einer Gasbehandlungsanlage (1) nach einem der Ansprüche 1 bis 6,
bei dem wenigstens einer Injektionslanze (5) wenigstens eine Zusatzkomponente (6) zugeführt und aus wenigstens einer Düsenöffnung (27) wenigstens einer Düseneinheit (19) der wenigstens einen Injektionslanze (5) zunächst in einen die wenigstens eine Düsenöffnung (27) umschließenden Kragen (29) gedüst wird, bei dem der Kragen (29) die Düsenöffnung (27) gegenüber dem am Kragen (29) vorbei strömenden Gasstrom (2) abschirmt, bei dem sich die Geschwindigkeit der in den Kragen (29) eingedüsten Zusatzkomponente (6) beim Durchströmen des Kragens (29) verringert und mit der verringerten Geschwindigkeit aus dem Kragen (29) in den Gasstrom (2) übertritt, bei dem über die wenigstens eine Injektionslanze (5) ausschließlich wenigstens eine dampfförmige und/oder flüssige Zusatzkomponente (6) in Form eines Reaktionsmittels zur selektiven katalytischen Reduktion (SCR) von Stickoxiden des wenigstens einen Gasstroms (2) in den wenigstens einen Gasstrom (2) eingedüst wird und
bei dem die Stickoxide (NOₓ) des wenigstens einen Gasstroms (2) mit dem wenigstens einen Reduktionsmittel an wenigstens einem SCR-Katalysator (9) selektiv reduziert werden.

8. Verfahren nach Anspruch 7,
bei dem die wenigstens eine Zusatzkomponente (6) den wenigstens einen Kragen (29) wenigstens im Wesentlichen in der gleichen Richtung durchströmt wie der wenigstens eine Gasstrom (2) den wenigstens einen Kragen (29) passiert und/oder
bei dem der Strömungsquerschnitt der wenigstens einen Zusatzkomponente (6) beim Durchströmen des wenigstens einen Kragens (29) aufgeweitet wird.

9. Verfahren nach Anspruch 7 oder 8,
bei dem die Geschwindigkeit der wenigstens einen aus dem wenigstens einen Kragen (29) ausströmenden Zusatzkomponente (6) weniger als das Fünffache, vorzugsweise weniger als das Dreifache, insbesondere weniger als das Doppelte, der Geschwindigkeit des wenigstens einen an dem wenigstens einen Kragen (29) vorbeiströmenden Gasstroms (2) beträgt und/oder dass die Geschwindigkeit der wenigstens einen Zusatzkomponente (6) beim Austreten aus der wenigstens einen Düsenöffnung (27) wenigstens siebenfach, vorzugsweise wenigstens zehnfach, insbesondere wenigstens zwanzigfach, so groß ist wie die Geschwindigkeit des den Kragen passierenden wenigstens einen Gasstroms (2) und/oder der Austrittsgeschwindigkeit der wenigstens einen Zusatzkomponente (6) aus dem wenigstens einen Kragen (29) ist.

10. Verfahren nach einem der Ansprüche 7 bis 9,
bei dem das wenigstens eine Reaktionsmittel ein Reduktionsmittel, insbesondere Ammoniak, Harnstoff oder wenigstens ein Ammoniumsalz, ist und/oder der wenigstens eine Gasstrom ein Rauchgas ist.

## Claims

1. Gas treatment system (1) with at least one channel (3) for channelling at least one gas flow (2) and with at least injection lance (5) introduced in the at least one channel (3) to inject exclusively at least one vaporous and/or liquid additive component (6) in the at least one gas flow (2), wherein the at least one injection lance comprises at least one nozzle unit (19) to inject the at least one additive component (6) into the at least one gas flow (2) via at least one nozzle opening (27) and at least one supply unit (20) to supply the at least one additive component (6) to the at least one nozzle unit (19), wherein at least one SCR catalyst (9) is arranged downstream of the at least one injection lance (5) in the flow direction of the at least one gas flow (2) for the reaction of the additive component (6) and at least one component of the at least one gas flow (2) for the selective reduction of nitrogen oxides (NOₓ) in the at least one gas flow (2), and wherein at least one collar (29) surrounding the at least one nozzle opening (27) and extending in the injection direction of the additive component (6) is provided, **characterised in that** the collar (29) is formed to shield the nozzle opening (27) from the gas flow (2) flowing past the collar (29).

2. Gas treatment system according to claim 1, **characterised in that** the at least one collar (29) is formed closed peripherally to the at least one nozzle opening (27) and/or **in that** the at least one collar (29) is formed closed in a cover region of the collar (29) and/or the at least one collar (29) is open for the exit of the additive component (6) at the side opposite the at least one nozzle opening (27) in the injection direction.

3. Gas treatment system according to claim 1 or 2, **characterised in that** the cross-section of the at least one collar (29) expands from the at least one nozzle opening (27) in the injection direction, preferably in a funnel shape, in particular continuously, further in particular uniformly and/or **in that** the at least one collar (29) in the injection direction has an opening angle (α) of between 40° and 100°, preferably between 50° and 90°, in particular between 60° and 80°.

4. Gas treatment system according to any one of claims 1 to 3, **characterised in that** the at least one collar (29) has a triangular, square, hexagonal, octagonal, round or oval cross-section and/or **in that** the cross-sectional area of the at least one collar (29) at the side of the collar (29) facing away from the at least one nozzle opening (27) is at least three times, preferably at least five times, in particular at least eight times, further in particular at least ten times as great as in the region of the nozzle opening (27).

5. Gas treatment system according to any one of claims 1 to 4, **characterised in that** the at least one nozzle unit (19) is formed as a two-substance nozzle (26) and/or a multi-substance nozzle and/or **in that** a rinsing line (18) at least partially enclosing the at least one supply unit (20) for supplying the at least one additive component (6) is provided to be flowed through by a rinsing fluid (15) in the direction of the at least one nozzle unit (19).

6. Gas treatment system according to any one of claims 1 to 5, **characterised in that** the at least one injection lance (5) has at least one connection (11) for at least one additive component (6) and/or **in that** the at least one injection lance (5) has at least one connection (12) for at least one propellant (14) to inject the at least one additive component (6) and/or in that at least one connection (13) is provided for at least one rinsing fluid (15) to rinse the at least one injection lance (5).

7. Method for treating at least one gas flow (2), in particular in a gas treatment system (1) according to any one of claims 1 to 6, in which at least one additive component (6) is supplied to at least one injection lance (5) and injection is carried out from at least one nozzle opening (27) of at least one nozzle unit (19) of the at least one injection lance (5) initially into a collar (29) surrounding the at least one nozzle opening (27), in the case of which the collar (29) shields the nozzle opening (27) against the gas flow (2) flowing past the collar (29), in the case of which the speed of the additive component (6) injected into the collar (29) is reduced when flowing through the collar (29) and passes from the collar (29) into the gas flow (2) at the reduced speed, in the case of which via the at least one injection lance (5) exclusively at least one vaporous and/or liquid additive component (6) in the form of a reactant is injected into the at least one gas flow (2) for the selective catalytic reduction (SCR) of nitrogen oxides of the at least one gas flow (2) and in the case of which the nitrogen oxides (NOₓ) of the at least one gas flow (2) are selectively reduced with the at least one reductant on at least one SCR catalyst (9).

8. Method according to claim 7, in the case of which the at least one additive component (6) flows through the at least one collar (29) at least substantially in the same direction as the at least one gas flow (2) passes the at least one collar (29) and/or in the case of which the flow cross-section of the at least one additive component (6) is expanded when flowing through the at least one collar (29).

9. Method according to claim 7 or 8, in the case of which the speed of the at least one additive component (6) flowing out of the at least one collar (29) is less than five times, preferably less than three times, in particular less than double the speed of the at least one gas flow (2) flowing past the at least one collar (29) and/or in that the speed of the at least one additive component (6) when exiting the at least nozzle opening (27) is at least seven times, preferably at least ten times, in particular at least twenty times as great as the speed of the at least one gas flow (2) passing the collar and/or the exit speed of the at least one additive component (6) from the at least one collar (29).

10. Method according to any one of clams 7 to 9, in the case of which the at least one reactant is a reductant, in particular ammonia, urea or at least one ammonium salt and/or the at least one gas flow is a flue gas.

## Revendications

1. Installation de traitement de gaz (1) comprenant au moins un canal (3) servant au passage d'au moins un flux de gaz (2) et comprenant au moins une lance d'injection (5) introduite dans l'au moins un canal (3) pour injecter exclusivement au moins une composante supplémentaire (6) sous forme vapeur et/ou liquide dans l'au moins un flux de gaz (2), l'au moins une lance d'injection (5) comportant au moins une unité de buse (19) servant à l'injection de l'au moins une composante supplémentaire (6) dans l'au moins un flux de gaz (2) par le biais d'au moins une ouverture de buse (27) et au moins une unité d'acheminement (20) destinée à acheminer l'au moins une composante supplémentaire (6) à l'au moins une unité de buse (19), au moins un catalyseur à RCS (9) pour la réaction de la composante supplémentaire (6) et d'au moins une composante de l'au moins un flux de gaz (2) en vue de la réduction sélective des oxydes d'azote (NOₓ) est branché en aval de l'au moins une lance d'injection (5) dans le sens de l'écoulement de l'au moins un flux de gaz (2), et au moins un collet (29) qui entoure l'au moins une ouverture de buse (27) et qui s'étend dans la direction de l'injection de la composante supplémentaire (6) étant présent, **caractérisé en ce que**
le collet (29) est configuré pour servir d'écran de protection à l'ouverture de buse (27) contre le flux de gaz (2) qui passe devant le collet (29).

2. Installation de traitement de gaz selon la revendication 1, **caractérisé en ce que** l'au moins un collet (29) est de configuration fermée circonférentielle par rapport à l'au moins une ouverture de buse (27) et/ou **en ce que** l'au moins un collet (29) est de configuration fermée dans une zone d'enveloppe du collet (29) et/ou l'au moins un collet (29), pour la sortie de la composante supplémentaire (6), est ouvert au niveau du côté de l'au moins une ouverture de buse (27) opposé à la direction d'injection.

3. Installation de traitement de gaz selon la revendication 1 ou 2, **caractérisé en ce que** la section transversale de l'au moins un collet (29) s'élargit à partir de l'au moins une ouverture de buse (27) dans la direction d'injection, de préférence en forme d'entonnoir, notamment continuellement, plus particulièrement uniformément, et/ou **en ce que** l'au moins un collet (29) présente, dans la direction d'injection, un angle d'ouverture (a) entre 40° et 100°, de préférence entre 50° et 90°, notamment entre 60° et 80°.

4. Installation de traitement de gaz selon l'une des revendications 1 à 3, **caractérisé en ce que** l'au moins un collet (29) possède une section transversale triangulaire, quadrangulaire, hexagonale, octogonale, ronde ou ovale et/ou **en ce que** la surface de section transversale de l'au moins un collet (29) au niveau du côté du collet (29) opposé à l'au moins une ouverture de buse (27) est au moins trois fois, de préférence au moins cinq fois, notamment au moins huit fois, plus particulièrement au moins dix fois plus grande que dans la zone de l'ouverture de buse (27).

5. Installation de traitement de gaz selon l'une des revendications 1 à 4, **caractérisé en ce que** l'au moins une unité de buse (19) est réalisée sous la forme d'une buse à deux fluides (26) et/ou buse à fluides multiples et/ou **en ce qu'**une conduite de rinçage (18) est présente, laquelle entoure au moins partiellement l'au moins une unité d'acheminement (20) destinée à acheminer l'au moins une composante supplémentaire (6) et est destinée à être traversée par un courant de fluide de rinçage (15) en direction de l'au moins une unité de buse (19).

6. Installation de traitement de gaz selon l'une des revendications 1 à 5, **caractérisé en ce que** l'au moins une lance d'injection (5) possède au moins un raccord (11) pour au moins une composante supplémentaire (6) et/ou **en ce que** l'au moins une lance d'injection (5) possède au moins un raccord (12) pour au moins un agent propulseur (14) servant à l'injection de l'au moins une composante supplémentaire (6) et/ou qu'au moins un raccord (13) est présent pour au moins un fluide de rinçage (15) servant au rinçage de l'au moins une lance d'injection (5).

7. Procédé de traitement d'au moins un flux de gaz (2), notamment dans une installation de traitement de gaz selon l'une des revendications 1 à 6,
avec lequel au moins une composante supplémentaire (6) est acheminée à l'au moins une lance d'injection (5) et injecté, depuis au moins une ouverture de buse (27) d'au moins une unité de buse (19) de l'au moins une lance d'injection (5), tout d'abord dans un collet (29) qui entoure l'au moins une ouverture de buse (27),
avec lequel le collet (29) protège l'ouverture de buse (27) contre le flux de gaz (2) qui passe devant le collet (29),
avec lequel la composante supplémentaire (6) injectée dans le collet (29) réduit sa vitesse lors du passage à travers le collet (29) et déborde du collet (29) dans le flux de gaz (2) à la vitesse réduite,
avec lequel exclusivement au moins une composante supplémentaire (6) sous forme vapeur et/ou liquide sous la forme d'un réactif servant à la réduction catalytique sélective (RCS) des oxydes d'azote de l'au moins un flux de gaz (2) est injectée dans l'au moins un flux de gaz (2) par le biais de l'au moins une lance d'injection (5) et
avec lequel les oxydes d'azote (NOₓ) de l'au moins un flux de gaz (2) sont réduits sélectivement par l'au moins un agent réducteur au niveau d'au moins un catalyseur à RCS (9).

8. Procédé selon la revendication 7,
avec lequel l'au moins une composante supplémentaire (6) traverse l'au moins un collet (29) au moins sensiblement dans la même direction que celle dans laquelle l'au moins un flux de gaz (2) passe devant l'au moins un collet (29)
et/ou
avec lequel la section transversale d'écoulement de l'au moins une composante supplémentaire (6) est élargie lors de l'écoulement à travers de l'au moins un collet (29).

9. Procédé selon la revendication 7 ou 8,
avec lequel la vitesse de l'au moins une composante supplémentaire (6) qui s'écoule hors de l'au moins un collet (29) est inférieure au quintuple, de préférence inférieure au triple, notamment inférieure au double de la vitesse de l'au moins un flux de gaz (2) qui s'écoule devant l'au moins un collet (29) et/ou en ce que la vitesse de l'au moins une composante supplémentaire (6), lors de la sortie de l'au moins une ouverture de buse (27), est au moins sept fois, de préférence au moins dix fois, notamment au moins vingt fois plus grande que la vitesse de l'au moins un flux de gaz (2) qui passe devant le collet et/ou la vitesse de sortie de l'au moins une composante supplémentaire (6) hors de l'au moins un collet (29).

10. Procédé selon l'une des revendications 7 à 9,
avec lequel l'au moins un réactif est un agent réducteur, notamment de l'ammoniac, de l'urée ou au moins un sel d'ammonium et/ou l'au moins un flux de gaz est un gaz de fumée.
